# EUROPÄISCHE PATENTANMELDUNG

(11) **EP 4 667 783 A1**
(43) Veröffentlichungstag der Anmeldung: **24.12.2025**
(21) Anmeldenummer: 25178132.4
(22) Anmeldetag: 22.05.2025
(51) Int. Cl.: F16H 57/04

(54) **ANTRIEBSANORDNUNG UND FAHRZEUG MIT EINER SOLCHEN ANTRIEBSANORDNUNG**

(30) Priorität: 21.06.2024 DE 102024205781
(71) Anmelder: Robert Bosch GmbH, 70442 Stuttgart (DE)
(72) Erfinder: Mischkolin, Frank, 71364 Winnenden (DE)

(57) **Zusammenfassung**

Die Erfindung betrifft eine Antriebsanordnung (10) für ein Fahrzeug mit einem Kühlkreislauf (12), in dem ein Kühlmittel (14) gefördert wird, umfassend eine elektrische Maschine (16) mit einem Stator (18) und einem Rotor (20), ein Mehrwegeventil (22), wobei der Kühlkreislauf (12) mindestens einen ersten Kühlmittelpfad (24) und mindestens einen zweiten Kühlmittelpfad (26) umfasst, wobei der Kühlkreislauf (12) derart eingerichtet ist, dass durch eine Rotationsbewegung am Mehrwegeventil (22) die elektrische Maschine (16), der Stator (18) und/oder der Rotor (20) mit dem ersten Kühlmittelpfad (24) und/oder dem zweiten Kühlmittelpfad (26) fluidisch gekoppelt werden kann. Die Erfindung betrifft zudem ein Fahrzeug mit einer derartigen Antriebsanordnung.

## Beschreibung

### Stand der Technik

Die Erfindung betrifft eine Antriebsanordnung, insbesondere für ein Fahrzeug, mit Merkmalen des Anspruchs 1, sowie ein Fahrzeug mit Merkmalen des nebengeordneten Anspruchs.

Das Temperaturmanagement in elektrisch angetriebenen Personen- und Nutzfahrzeugen erfordert einen Kühlkreislauf, in dem eine Kühlflüssigkeit gefördert wird. Die Kühlflüssigkeit wird üblicherweise mittels einer Pumpe gefördert und mittels verschiedener, elektrisch gesteuerter Ventile an die zu kühlenden Komponenten geleitet.

DE 10 2015 220 535 A1 offenbart ein Hydrauliksystem zur Kühlung eines Automatikgetriebes.

Nachteilig dabei ist, dass eine Vielzahl an elektrischen und/oder hydraulischen Komponenten und elektrischen Verbindungen benötigt wird, was das Gesamtsystem komplex macht.

### Offenbarung der Erfindung

Erfindungsgemäß wird eine Antriebsanordnung für ein Fahrzeug, insbesondere ein Kraftfahrzeug, vorgeschlagen. Die Antriebsanordnung umfasst einen Kühlkreislauf, in dem ein Kühlmittel gefördert wird. Der Kühlkreislauf umfasst eine elektrische Maschine mit einem Stator und einem Rotor und ein Mehrwegeventil. Der Kühlkreislauf umfasst mindestens einen ersten Kühlmittelpfad und mindestens einen zweiten Kühlmittelpfad. Der Kühlkreislauf, insbesondere das Mehrwegeventil, ist derart eingerichtet, dass durch eine Rotationsbewegung am Mehrwegeventil (bzw. durch eine Rotationsbewegung des Mehrwegeventils) die elektrische Maschine, der Stator und/oder der Rotor mit dem ersten Kühlmittelpfad und/oder dem zweiten Kühlmittelpfad fluidisch gekoppelt werden kann.

Hierdurch können die elektrischen und/oder hydraulischen Komponenten der Antriebsanordnung und somit die Komplexität des Gesamtsystems reduziert werden. Hierdurch kann der Montage- und Wartungsaufwand und damit die Kosten reduziert werden. Zudem kann der Kühlmittelfluss durch den Stator und/ den Rotor der elektrischen Maschine kontrolliert gesteuert werden.

Das Kühlmittel kann auch als Schmiermittel dienen, sodass die Begriffe Kühlkreislauf, Kühlmittel, Kühlmittelpumpe, Kühlmittelreservoir und Kühlmittelsumpf vorliegend analog zu den Begriffen Schmiermittelkreislauf, Schmiermittel, Schmiermittelpumpe, Schmiermittelreservoir und Schmiermittelsumpf zu verstehen sind. Das Kühlmittel bzw. Schmiermittel kann Öl sein.

Mit einer fluidischen Verbindung bzw. einer fluidischen Kopplung ist vorliegend gemeint, dass ein Gas und/oder eine Flüssigkeit (Kühlmittel bzw. Schmiermittel) zwischen zwei fluidisch gekoppelten Elementen bzw. zwischen zwei in fluidischer Verbindung stehender Elemente fließen kann.

Gemäß einer Weiterbildung der Antriebsanordnung kann der erste Kühlmittelpfad einen Wärmetauscher umfassen. Der Wärmetauscher kann eingerichtet sein, um Wärme aus dem ersten Kühlmittelpfad abzutransportieren. Der Wärmetauscher kann hierzu an einen externen Kühlkreislauf gekoppelt sein.

Hierdurch kann der erste Kühlmittelpfad (insbesondere ggü. dem zweiten Kühlmittelpfad) mit einfachen Mitteln gekühlt werden. Damit können zwei Kühlmittelpfade mit unterschiedlichen Temperaturen bereitgestellt werden.

Gemäß einer Weiterbildung der Antriebsanordnung kann der Kühlkreislauf ein Kühlmittelreservoir umfassen. Das Kühlmittelreservoir kann zur Bevorratung von Kühlmittel eingerichtet sein. Das Kühlmittelreservoir kann als Kühlmittelsumpf ausgebildet sein.

Hierdurch kann das Kühlmittel mit einfachen Mitteln bevorratet bzw. bereitgestellt werden.

Gemäß einer Weiterbildung der Antriebsanordnung kann der Kühlkreislauf eine Kühlmittelpumpe umfassen. Die Kühlmittelpumpe kann zum Fördern des Kühlmittels innerhalb des Kühlkreislaufes eingerichtet sein.

Hierdurch kann das Kühlmittel mit einfachen Mitteln innerhalb des Kühlkreislaufes gefördert werden.

Gemäß einer Weiterbildung der Antriebsanordnung kann das Mehrwegeventil einen ersten Eingang, einen zweiten Eingang und mindestens einen ersten Ausgang aufweisen. Der erste Kühlmittelpfad kann mit dem ersten Eingang fluidisch gekoppelt sein. Der zweite Kühlmittelpfad kann mit dem zweiten Eingang fluidisch gekoppelt sein. Der erste Ausgang kann mit der elektrischen Maschine, dem Stator und/oder dem Rotor fluidisch gekoppelt sein.

Insbesondere kann das Mehrwegeventil zwei erste Ausgänge aufweisen. Dabei kann ein erster der zwei ersten Ausgänge mit dem Rotor der elektrischen Maschine und ein zweiter der zwei ersten Ausgänge mit dem Stator der elektrischen Maschine fluidisch gekoppelt sein. Das Mehrwegeventil kann derart eingerichtet sein, dass durch eine Rotationsbewegung am Mehrwegeventil (bzw. durch eine Rotationsbewegung des Mehrwegeventils) der erste Eingang und/oder der zweite Eingang mit dem ersten Ausgang (bzw. mit dem ersten und/oder dem zweiten der zwei ersten Ausgänge) fluidisch gekoppelt werden kann.

Hierdurch können der erste Eingang, der zweite Eingang und/oder der erste Ausgang bzw. die ersten Ausgänge des Mehrwegeventils mit einfachen Mitteln fluidisch gekoppelt werden. Insbesondere können die elektrische Maschine, der Stator und/oder der Rotor wahlweise an den ersten und/oder den zweiten Kühlmittelpfad fluidisch gekoppelt und damit wunschgemäß temperiert werden. Gemäß einer Weiterbildung der Antriebsanordnung kann der Kühlkreislauf ein Getriebe umfassen. Das Getriebe kann zum Übertragen eines Drehmoments innerhalb der Antriebsanordnung eingerichtet sein. Das Mehrwegeventil kann mindestens einen zweiten Ausgang aufweisen. Der zweite Ausgang kann mit dem Getriebe fluidisch gekoppelt sein. Das Mehrwegeventil kann derart eingerichtet sein, dass durch eine Rotationsbewegung am Mehrwegeventil (bzw. durch eine Rotationsbewegung des Mehrwegeventils) der erste Eingang und/oder der zweite Eingang mit dem zweiten Ausgang fluidisch gekoppelt werden kann.

Hierdurch können der erste Eingang, der zweite Eingang und/oder der zweite Ausgang des Mehrwegeventils mit einfachen Mitteln fluidisch gekoppelt werden. Insbesondere kann das Getriebe wahlweise mit dem ersten Kühlmittelpfad oder dem zweiten Kühlmittelpfad fluidisch gekoppelt und damit wunschgemäß temperiert werden.

Gemäß einer Weiterbildung der Antriebsanordnung kann der Kühlkreislauf eine Parksperre umfassen. Die Parksperre kann zum Blockieren und/oder Freigeben einer Drehmomentübertragung innerhalb der Antriebsanordnung eingerichtet sein. Das Mehrwegeventil kann mindestens einen dritten Ausgang aufweisen. Das Mehrwegeventil kann derart eingerichtet sein, dass durch eine Rotationsbewegung am Mehrwegeventil (bzw. durch eine Rotationsbewegung des Mehrwegeventils (der erste Eingang und/oder der zweite Eingang mit dem dritten Ausgang fluidisch gekoppelt werden kann.

Hierdurch können der erste Eingang, der zweite Eingang und/oder der dritte Ausgang des Mehrwegeventils mit einfachen Mitteln fluidisch gekoppelt werden. Insbesondere kann die Parksperre wahlweise mit dem ersten Kühlmittelpfad oder dem zweiten Kühlmittelpfad fluidisch gekoppelt und damit wunschgemäß temperiert werden.

Gemäß einer Weiterbildung der Antriebsanordnung kann das Mehrwegeventil eine drehbar gelagerte Scheibe umfassen. An und/oder innerhalb der Scheibe kann mindestens eine Fluidleitung zum fluidischen Koppeln des ersten Eingangs mit dem ersten, zweiten und/oder dritten Ausgang angeordnet sein. Alternativ oder zusätzlich kann die Fluidleitung zum fluidischen Koppeln des zweiten Eingangs mit dem ersten, zweiten und/oder dritten Ausgang eingerichtet sein. Mit anderen Worten, die Fluidleitung oder die Fluidleitungen können die jeweiligen Eingänge mit den jeweiligen Ausgängen des Mehrwegeventils fluidisch koppeln. Das Mehrwegeventil kann ein Gehäuse umfassen, wobei die Scheibe innerhalb des Gehäuses angeordnet sein kann. Die Scheibe kann im Gehäuse drehbar gelagert sein.

Hierdurch kann das Mehrwegeventil mit einfachen Mitteln umgesetzt werden.

Gemäß einer Weiterbildung der Antriebsanordnung kann das Mehrwegeventil eine weitere elektrische Maschine umfassen. Die weitere elektrische Maschine kann eingerichtet sein, um die Rotationsbewegung am Mehrwegeventil (bzw. die Rotationsbewegung des Mehrwegeventils), insbesondere eine Rotation der Scheibe des Mehrwegeventils, zu erzeugen.

Hierdurch kann mit einfachen Mitteln die Rotationsbewegung am Mehrwegeventil bzw. des Mehrwegeventils, insbesondere dessen Scheibe, umgesetzt werden.

Erfindungsgemäß wird ein Fahrzeug, insbesondere ein Kraftfahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend werden Ausführungsformen der Erfindung unter Bezugnahme auf die beiliegenden Zeichnungen erläutert. Es zeigen:
- Figur 1: eine schematische Darstellung einer Antriebsanordnung in einem ersten Zustand
- Figur 2: eine schematische Darstellung der Antriebsanordnung gemäß Figur 1 in einem zweiten Zustand und
- Figur 3: eine schematische Darstellung der Antriebsanordnung gemäß einem weiteren Ausführungsbeispiel.

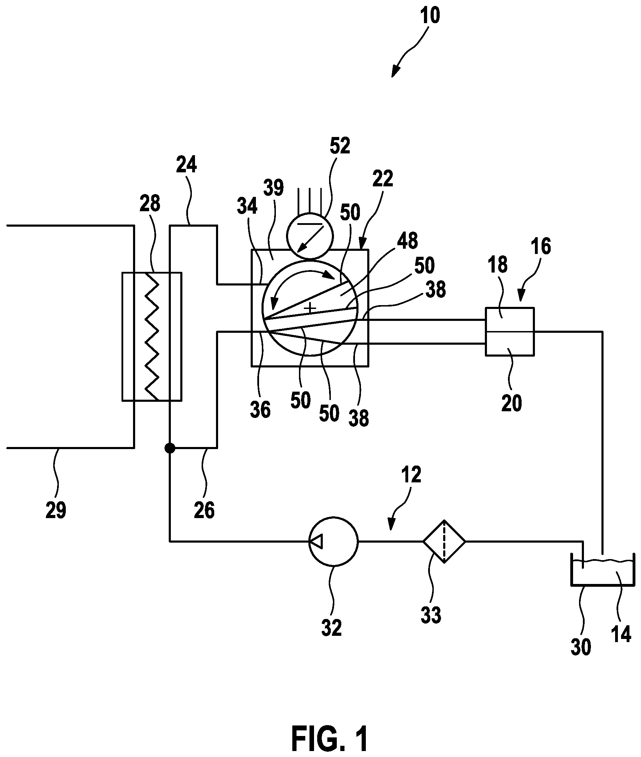

Die Antriebsanordnung trägt in Figur 1 insgesamt das Bezugszeichen 10. Die Antriebsanordnung 10 kann für ein Fahrzeug, insbesondere ein Kraftfahrzeug, eingerichtet sein.

Die Antriebsanordnung 10 umfasst einen Kühlkreislauf 12, in dem ein Kühlmittel 14 gefördert wird. Der Kühlkreislauf 12 umfasst eine elektrische Maschine 16 mit einem Stator 18 und einem Rotor 20. Der Kühlkreislauf 12 umfasst ein Mehrwegeventil 22.

Der Kühlkreislauf 12 weist mindestens einen ersten Kühlmittelpfad 24 und mindestens einen zweiten Kühlmittelpfad 26 auf. Der Kühlkreislauf 12, insbesondere das Mehrwegeventil 22, ist derart eingerichtet, dass durch eine Rotationsbewegung am Mehrwegeventil 22 (bzw. durch eine Rotationsbewegung des Mehrwegeventils 22) die elektrische Maschine 16, der Stator 18 und/oder der Rotor 20 (wahlweise) mit dem ersten Kühlmittelpfad 24 und/oder dem zweiten Kühlmittelpfad 26 fluidisch gekoppelt werden kann.

Der erste Kühlmittelpfad 24 kann einen Wärmetauscher 28 umfassen. Der Wärmetauscher 28 kann zum Abführen von Wärme aus dem ersten Kühlmittelpfad 24 eingerichtet sein. Der Wärmetauscher 28 kann hierzu mit einem externen Kühlkreislauf 29, der die Wärme des Wärmetauschers 28 nach extern transportiert, gekoppelt sein.

Der Kühlkreislauf 12 kann ein Kühlmittelreservoir 30 zur Bevorratung von Kühlmittel 14 umfassen. Das Kühlmittelreservoir 30 ist vorliegend als Kühlmittelsumpf ausgebildet.

Der Kühlkreislauf 12 kann eine Kühlmittelpumpe 32 zum Fördern des Kühlmittels 14 innerhalb des Kühlkreislaufes 12 umfassen. Der Kühlkreislauf 12 kann zudem mindestens einen Filter 33 umfassen. Hierdurch kann das Kühlmittel 14 gefiltert und der Kühlkreislauf 12 frei von bspw. Fremdkörpern oder Fremdkörperteilchen gehalten werden.

Das Mehrwegeventil 22 kann einen ersten Eingang 34, einen zweiten Eingang 36 und mindestens einen ersten Ausgang 38 aufweisen. Der erste Kühlmittelpfad 24 kann mit dem ersten Eingang 34 fluidisch gekoppelt sein. Der zweite Kühlmittelpfad 26 kann mit dem zweiten Eingang 36 fluidisch gekoppelt sein. Der erste Ausgang 38 kann mit der elektrischen Maschine 16, dem Stator 18 und/oder dem Rotor 20 fluidisch gekoppelt sein. Das Mehrwegeventil 22 kann derart eingerichtet sein, dass durch eine Rotationsbewegung am Mehrwegeventil 22 (bzw. durch eine Rotationsbewegung des Mehrwegeventils 22) der erste Eingang 34 und/oder der zweite Eingang 36 mit dem ersten Ausgang 38 fluidisch gekoppelt werden kann.

Vorliegend weist das Mehrwegeventil zwei erste Ausgänge 38 auf. Dabei ist ein erster der zwei ersten Ausgänge 38 mit dem Stator 18 und ein zweiter der zwei ersten Ausgänge 38 mit dem Rotor 20 fluidisch gekoppelt.

Das Mehrwegeventil 22 umfasst vorliegend eine drehbar gelagerte Scheibe 48. Die Scheibe 48 ist vorliegend innerhalb eines Gehäuses 39 angeordnet. Die Scheibe 48 ist insbesondere innerhalb des Gehäuses 39 drehbar gelagert. An und/oder innerhalb der Scheibe 48 sind vorliegend vier Fluidleitungen 50 angeordnet. Das Mehrwegeventil 22 ist vorliegend derart eingerichtet, dass durch eine Rotation der Scheibe 48 des Mehrwegeventils 22 der erste Eingang 34 oder der zweite Eingang 36 mit den beiden ersten Ausgängen fluidisch gekoppelt werden kann.

Das Mehrwegeventil 22 bzw. dessen Scheibe 48 ist vorliegend in einem ersten Zustand angeordnet. In diesem Zustand sind die beiden ersten Ausgänge 38 jeweils mittels einer Fluidleitung 50 mit dem zweiten Eingang 36 fluidisch gekoppelt.

Damit kann das Kühlmittel 14 vorliegend aus dem Kühlmittelreservoir 30 durch den Filter 33, die Kühlmittelpumpe 32, den zweiten Kühlmittelpfad 26, den zweiten Eingang 36, die beiden ersten Ausgänge 38, den Stator 18 und den Rotor 20 wieder in das Kühlmittelreservoir 30 geleitet werden. Vorliegend wird der erste Eingang 34 mittels der Scheibe 48 im ersten Zustand blockiert. Damit wird auch ein Kühlmittelfluss über den ersten Kühlmittelpfad 24 und damit durch den Wärmetauscher 28 verhindert.

Das Mehrwegeventil 22 kann eine weitere elektrische Maschine 52 umfassen. Die weitere elektrische Maschine 52 kann eingerichtet sein, um die Rotationsbewegung am Mehrwegeventil 22 (bzw. die Rotationsbewegung des Mehrwegeventils 22), vorliegend eine Rotation der Scheibe 48, zu erzeugen.

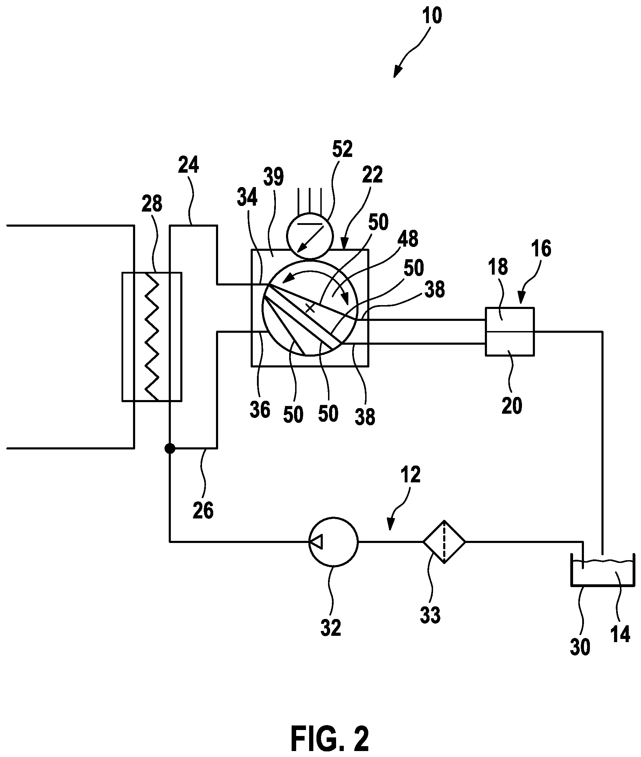

Figur 2 zeigt eine schematische Darstellung der Antriebsanordnung 10 gemäß Figur 1 in einem zweiten Zustand. In dem dargestellten zweiten Zustand ist die Scheibe 48 gegenüber dem ersten, in Figur 1 gezeigten, Zustand gedreht dargestellt (insbesondere um 45°). In diesem Zustand sind die beiden ersten Ausgänge 38 jeweils mittels einer Fluidleitung 50 mit dem ersten Eingang 34 fluidisch gekoppelt.

Damit kann das Kühlmittel 14 vorliegend aus dem Kühlmittelreservoir 30 durch den Filter 33, die Kühlmittelpumpe 32, den ersten Kühlmittelpfad 24 und den Wärmetauscher 28, den ersten Eingang 34, die beiden ersten Ausgänge 38, den Stator 18 und den Rotor wieder in das Kühlmittelreservoir 30 geleitet werden. Vorliegend wird der zweite Eingang 36 mittels der Scheibe 48 im zweiten Zustand blockiert. Damit wird auch ein Kühlmittelfluss über den zweiten Kühlmittelpfad 26 verhindert.

Damit werden vorliegend der Stator 18 und der Rotor 20 (bzw. die elektrische Maschine 16) im ersten Zustand der Antriebsanordnung 10 mit Kühlmittel versorgt, das nicht durch den Wärmetauscher 28 geleitet worden ist, und im zweiten Zustand der Antriebsanordnung 10 mit Kühlmittel 14 versorgt, das durch den Wärmetauscher 28 geleitet worden ist.

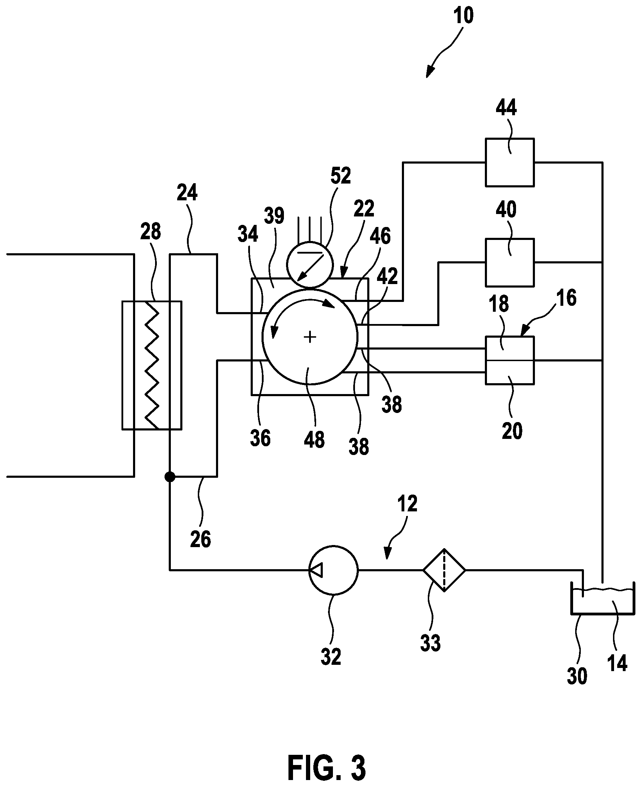

Figur 3 zeigt eine schematische Darstellung der Antriebsanordnung 10 gemäß einem weiteren Ausführungsbeispiel. Das weitere Ausführungsbeispiel unterscheidet sich von dem in Figuren 1 und 2 gezeigten Ausführungsbeispiel durch Folgendes:

Der Kühlkreislauf 12 kann ein Getriebe 40 zum Übertragen eines Drehmoments innerhalb der Antriebsanordnung 10 umfassen. Das Mehrwegeventil 22 kann mindestens einen zweiten Ausgang 42 aufweisen. Der zweite Ausgang 42 kann mit dem Getriebe 40 fluidisch gekoppelt sein. Das Mehrwegeventil 22 kann derart eingerichtet sein, dass durch eine Rotationsbewegung am Mehrwegeventil 22 (bzw. durch eine Rotationsbewegung des Mehrwegeventils 22), vorliegend durch eine Rotation der Scheibe 48, der erste Eingang 34 und/oder der zweite Eingang 36 mit dem zweiten Ausgang 42 fluidisch gekoppelt werden kann.

Der Kühlkreislauf 12 kann eine Parksperre 44 zum Blockieren und/oder Freigeben einer Drehmomentübertragung innerhalb der Antriebsanordnung 10 umfassen. Das Mehrwegeventil 22 kann mindestens einen dritten Ausgang 46 aufweisen. Der dritte Ausgang 46 kann mit der Parksperre 44 fluidisch gekoppelt sein. Das Mehrwegeventil 22 kann derart eingerichtet sein, dass durch eine Rotationsbewegung am Mehrwegeventil 22 (bzw. durch eine Rotationsbewegung des Mehrwegeventils 22), vorliegend durch eine Rotation der Scheibe 48, der erste Eingang 34 und/oder der zweite Eingang 36 mit dem dritten Ausgang 46 fluidisch gekoppelt werden kann.

Die Scheibe 48 kann mindestens eine Fluidleitung 50 zum fluidischen Koppeln des ersten Eingangs 34 mit dem ersten, zweiten und/oder dritten Ausgang 38, 42, 46 aufweisen. Alternativ oder zusätzlich kann die Fluidleitung 50 zum fluidischen Koppeln des zweiten Eingangs 36 mit dem ersten, zweiten und/oder dritten Ausgang 38, 42, 46 eingerichtet sein.

## Patentansprüche

1. Antriebsanordnung (10) für ein Fahrzeug, insbesondere ein Kraftfahrzeug, mit einem Kühlkreislauf (12), in dem ein Kühlmittel (14) gefördert wird, umfassend:
- eine elektrische Maschine (16) mit einem Stator (18) und einem Rotor (20),
- ein Mehrwegeventil (22),
- wobei der Kühlkreislauf (12) mindestens einen ersten Kühlmittelpfad (24) und mindestens einen zweiten Kühlmittelpfad (26) umfasst, wobei der Kühlkreislauf (12), insbesondere das Mehrwegeventil (22), derart eingerichtet ist, dass durch eine Rotationsbewegung am Mehrwegeventil (22) die elektrische Maschine (16), der Stator (18) und/oder der Rotor (20) mit dem ersten Kühlmittelpfad (24) und/oder dem zweiten Kühlmittelpfad (26) fluidisch gekoppelt werden kann.

2. Antriebsanordnung (10) nach Anspruch 1, **dadurch gekennzeichnet, dass** der erste Kühlmittelpfad (24) einen Wärmetauscher (28) umfasst.

3. Antriebsanordnung (10) nach Anspruch 1 oder 2, **dadurch gekennzeichnet, dass** der Kühlkreislauf (12) ein Kühlmittelreservoir (30) zur Bevorratung von Kühlmittel (14) umfasst.

4. Antriebsanordnung (10) nach einem der voranstehenden Ansprüche,
**dadurch gekennzeichnet, dass** der Kühlkreislauf (12) eine Kühlmittelpumpe (32) zum Fördern des Kühlmittels (14) innerhalb des Kühlkreislaufes (12) umfasst.

5. Antriebsanordnung (10) nach einem der voranstehenden Ansprüche,
**dadurch gekennzeichnet, dass** das Mehrwegeventil (22) einen ersten Eingang (34), einen zweiten Eingang (36) und mindestens einen ersten Ausgang (38) aufweist, wobei der erste Kühlmittelpfad (24) mit dem ersten Eingang (34) fluidisch gekoppelt ist, wobei der zweite Kühlmittelpfad (26) mit dem zweiten Eingang (36) fluidisch gekoppelt ist, wobei der erste Ausgang (38) mit der elektrischen Maschine (16), dem Stator (18) und/oder dem Rotor (20) fluidisch gekoppelt ist, wobei das Mehrwegeventil (22) derart eingerichtet ist, dass durch eine Rotationsbewegung am Mehrwegeventil (22) der erste Eingang (34) und/oder der zweite Eingang (36) mit dem ersten Ausgang (38) fluidisch gekoppelt werden kann.

6. Antriebsanordnung (10) nach einem der voranstehenden Ansprüche,
**dadurch gekennzeichnet, dass** der Kühlkreislauf (12) ein Getriebe (40) zum Übertragen eines Drehmomentes innerhalb der Antriebsanordnung (10) umfasst, wobei das Mehrwegeventil (22) mindestens einen zweiten Ausgang (42) aufweist, wobei der zweite Ausgang (42) mit dem Getriebe (40) fluidisch gekoppelt ist, wobei das Mehrwegeventil (22) derart eingerichtet ist, dass durch eine Rotationsbewegung am Mehrwegeventil (22) der erste Eingang (34) und/oder der zweite Eingang (36) mit dem zweiten Ausgang (42) fluidisch gekoppelt werden kann.

7. Antriebsanordnung (10) nach einem der voranstehenden Ansprüche,
**dadurch gekennzeichnet, dass** der Kühlkreislauf (12) eine Parksperre (44) zum Blockieren und/oder Freigeben einer Drehmomentübertragung innerhalb der Antriebsanordnung (10) umfasst, wobei das Mehrwegeventil (22) mindestens einen dritten Ausgang (46) aufweist, wobei der dritte Ausgang (46) mit der Parksperre (44) fluidisch gekoppelt ist, wobei das Mehrwegeventil (22) derart eingerichtet ist, dass durch eine Rotationsbewegung am Mehrwegeventil (22) der erste Eingang (34) und/oder der zweite Eingang (36) mit dem dritten Ausgang (46) fluidisch gekoppelt werden kann.

8. Antriebsanordnung (10) nach einem dem voranstehenden Ansprüche, **dadurch gekennzeichnet, dass** das Mehrwegeventil (22) eine drehbar gelagerte Scheibe (48) umfasst, wobei an und/oder innerhalb der Scheibe (48) mindestens eine Fluidleitung (50) zum fluidischen Koppeln des ersten Eingangs (34) mit dem ersten, zweiten und/oder dritten Ausgang (38, 42, 46) und/oder zum fluidischen Koppeln des zweiten Eingangs (36) mit dem ersten, zweiten und/oder dritten Ausgang (38, 42, 46) angeordnet ist.

9. Antriebsanordnung (10) nach einem der voranstehenden Ansprüche, **dadurch gekennzeichnet, dass** das Mehrwegeventil (22) eine weitere elektrische Maschine (52) umfasst, wobei die weitere elektrische Maschine (52) eingerichtet ist, um die Rotationsbewegung am Mehrwegeventil (22), insbesondere eine Rotation der Scheibe (48), zu erzeugen.

10. Fahrzeug, insbesondere Kraftfahrzeug, umfassend mindestens eine Antriebsanordnung (10) nach einem der voranstehenden Ansprüche.
